# EUROPÄISCHE PATENTSCHRIFT

(11) **EP 1 226 500 B1**
(45) Veröffentlichungstag und Bekanntmachung des Hinweises auf die Patenterteilung: **20.08.2003**
(21) Anmeldenummer: 00983027.4
(22) Anmeldetag: 17.10.2000
(51) Int. Cl.: G06F 11/16

(54) **INTEGRIERTER SCHALTKREIS MIT GEDOPPELTEN SYNCHRONEN UND ASYNCHRONEN KOMPONENTEN**
INTEGRATED CIRCUIT WITH DOUBLED SYNCHRONOUS AND ASYNCHRONOUS COMPONENTS
CIRCUIT INTEGRE A COMPOSANTS SYNCHRONES ET ASYNCHRONES DOUBLES

(30) Priorität: 18.10.1999 DE 19950131
(43) Veröffentlichungstag der Anmeldung: 31.07.2002
(73) Patentinhaber: SIEMENS AKTIENGESELLSCHAFT, 80333 München (DE)
(72) Erfinder: GHAMESHLU, Majid, A-1110 Wien (AT); KRAUSE, Karlheinz, 82152 Planegg (DE)
(86) Internationale Anmeldenummer: DE0003648
(87) Internationale Veröffentlichungsnummer: WO01029667

(56) Entgegenhaltungen:
- WO-A-94/08292
- GB-A- 2 268 817
- US-A- 4 703 452

## Beschreibung

Die Erfindung betrifft einen integrierten Schaltkreis mit zumindest zwei gleichartigen Hauptkomponenten, welche in mikrosynchroner Betriebsart beruhend auf einem Takt eines Haupttaktsystems betreibbar sind, sowie mit einer Vergleichereinrichtung, welcher die Signale einander entsprechender Ausgänge der Hauptkomponenten zum gegenseitigen Vergleich zugeführt sind und welche einen Vergleicherausgang zur Ausgabe eines Fehlersignals im Falle einer mangelhaften Übereinstimmung dieser Signale aufweist.

Bei vielen Anwendungen integrierter Schaltkreise, insbesondere in vermittlungstechnischen Systemen, wird aus sicherheitstechnischen Gründen eine gesteigerte Fehlersicherheit verlangt. Dies geschieht mittels einer Selbstüberwachung und Fehlererkennung innerhalb des integrierten Schaltkreises. In vielen Fällen enthält ein integrierter Schaltkreis sowohl getaktete Hauptkomponenten, die von einem gemeinsamen, externen oder intern erzeugten Takt angesteuert sind, als auch von diesem Takt unabhängige Komponenten. Letztere Komponenten werden als asynchrone Komponenten bezeichnet. Ein Beispiel unter vielen ist ein PCI-Baustein ('Personal Computer Interface'), welcher als asynchrone Komponente die PCI-Schaltung zur Steuerung eines PCI-Bus enthält.

Eine bekannte Vorgehensweise zur Selbstüberwachung integrierter Schaltkreise beruht auf Tests, welche mittels Software realisiert sind; diese Software-Tests werden regelmäßig, z.B. mittels einer Testschleife aufgerufen. Diese Lösung erfordert freilich, dass vom Anwender ein geeignetes Testprogramm implementiert wird, welches sämtliche zu überprüfenden Funktionen zuverlässig überprüft. Ein derartiger Software-Test benötigt zudem einen nicht unbeträchtlichen Anteil der ansonsten für die Anwendungsaufgaben nutzbaren Zeit. Außerdem erfolgt die Erkennung eines Fehlerzustandes erst zum Zeitpunkt eines Testdurchlaufs. Die bekannte BIST-Lösung (für 'Built-In Self Test', eingebauter Selbsttest) realisiert hardwaremäßig eine Selbstüberprüfung eines integrierten Schaltkreises. Der BIST-Selbsttest hat jedoch eine Laufzeit von zumeist 2-10 ms oder sogar darüber, und auch hier wird ein Fehler erst zum Zeitpunkt des Testdurchlaufs erkannt.

Ein anderer Lösungsansatz zur Erreichung der Fehlersicherheit besteht darin, die wesentlichen Hardwareteile innerhalb des integrierten Schaltkreises zu verdoppeln. Der Schaltkreis enthält somit zumindest zwei gleichartige Ausführungen seiner Hauptkomponenten. Die Betriebsweise eines so gedoppelten Schaltkreises erfolgt beispielsweise derart, dass eine der Hauptkomponenten als aktive Komponente die Aufgaben des Schaltkreise ausführt, während die andere Hauptkomponente passiv ist und im Leerlauf arbeitet; oder beide Hauptkomponenten arbeiten mikrosynchronisiert parallel in einem "Tandembetrieb".

In der WO 94/08292 ist eine gedoppelte Prozessorsteuereinheit beschrieben, bestehend aus zwei identischen, miteinander verbundenen Steuereinheiten mit je einer Prozessoreinheit, einem RAM-Datenspeicher und Peripherie-Schaltkreisen. Jede Prozessoreinheit ist dazu eingerichtet festzustellen, ob sie aktiv oder im Standby-Betrieb ist. Die aktive Prozessoreinheit führt die Schreibzyklen auf den RAM-Speicher synchron in beiden gedoppelten RAM-Speichern oder in einen der beiden RAM-Speicher durch. Die Standby-Einheit bleibt im Standby bis sie aufgrund einer Störung der aktiven Einheit aufgerufen wird, um die bisher aktive Einheit zu ersetzen. Die Aktivitäten der beiden Prozessoreinheiten nach der WO 94/08292 sind somit grundsätzlich asymmetrisch; der Zugriff auf periphere Komponenten einschließlich des Arbeitsspeichers wird grundsätzlich nur von der aktiven Prozessoreinheit vorgenommen. Eine Fehlfunktion der aktiven Prozessoreinheit führt daher, mangels eines Vergleiches mit z.B. einer parallellaufenden zweiten Prozessoreinheit, zu einem fehlerhaft geschriebenen Arbeitsspeicher oder Fehlzuständen in der Peripherie, die nach dem Umschalten auf die bisherige Standby-Einheit erst nachkorrigiert werden müssen.

Jede der beiden Prozessoreinheiten der WO 94/08292 ist darüber hinaus mit zwei Mikroprozessoren ausgestattet, die in mikrosynchronisiertem Modus arbeiten. Die Mikrosynchronität der beiden Mikroprozessoren wird mittels eines Vergleicherblocks überwacht, der zu jedem Zeitpunkt die Identität der Adressen-, Daten- und Steuersignale der beiden Prozessoren überprüft; eine Abweichung wird als Störung der betreffenden Prozessoreinheit interpretiert. Ein Fehler im mikrosynchronen Betrieb des Mikroprozessorpaares führt somit zu einem Interrupt-Signal bzw. Reset für die gesamte Prozessoreinheit. Die Doppelung der Mikroprozessoren innerhalb einer Prozessoreinheit führt zu einer "Tandemeinheit", die von einem einheitlichen Taktsignal versorgt wird. Aus der WO 94/08292 geht jedoch nicht hervor, wie asynchrone, nämlich von dem Takt der gedoppelten Mikroprozessoren unabhängig laufende Komponenten gehandhabt werden können.

Da auch in einem mikrosynchronen Betrieb die beteiligten Komponenten immer noch mit einer restlichen Taktabweichung arbeiten, besteht bei der Verarbeitung asynchroner Eingangssignale, insbesondere wenn diese sich im Bereich einer solchen Taktabweichung ändern, die Gefahr, dass diese Eingangssignale von den verschiedenen mikrosynchronen Komponenten verschiedenartig interpretiert werden. Dies würde somit zu einem raschen Verlust der Mikrosynchronität führen und einen Fehlerzustand auslösen.

Es ist daher Aufgabe der Erfindung, einen gedoppelten - somit aus zumindest zwei Hauptschaltkreisen bestehenden - integrierten Schaltkreis zu schaffen, in welchem in den Hauptschaltkreisen asynchrone Komponenten vorgesehen sind, ohne dass diese den mikrosynchronen Ablauf der Grundschaltkreise stören würden.

Diese Aufgabe wird ausgehend von dem integrierten Schaltkreis der eingangs genannten Art erfindungsgemäß mittels eines Schaltkreises gelöst mit zumindest einer von dem Takt des Haupttaktsystems angesteuerte Synchronisiereinrichtung zum Einsynchronisieren asynchroner Signale auf diesen Takt, welcher über zumindest einen Eingang asynchrone Eingangssignale zugeführt sind und welche zumindest einen Signalausgang für aus den asynchronen Eingangssignalen gewonnenen, einsynchronisierten Signale aufweist, welcher mit Eingängen der Hauptkomponenten verbunden ist, wobei jeweils gleichartige Eingänge sämtlicher Hauptkomponenten von demselben Signalausgang versorgt sind.

Diese Lösung löst die gestellte Aufgabe auf einfache Weise und gestattet insbesondere die Behandlung asynchroner Eingangssignale derart, dass eine zuverlässige Einspeisung dieser Eingangssignale ohne Beeinträchtigung des synchronen Ablaufs der Haupktkomponenten möglich ist.

Eine bevorzugte Ausführungsform der Erfindung, in welcher zum Zwecke der zusätzlichen Erhöhung der Fehlersicherheit auch die Verdoppelung asynchroner Komponenten vorgesehen ist, hat zumindest einen Satz asynchroner Komponenten, welche unabhängig von dem Takt des Haupttaktsystems betreibbar sind,
wobei die asynchronen Komponenten des/jedes Satzes untereinander gleichartig sind und jeweils zumindest einen mit einem internen Ausgang der Hauptkomponenten verbundenen asynchronen Eingang aufweisen, sowie jeweils eine asynchrone Komponente des/jedes Satzes einer Hauptkomponente zugeordnet ist,
wobei dem/jedem Satz asynchroner Komponenten zumindest eine von dem Takt des Haupttaktsystems angesteuerte Synchronisiereinrichtung zum Einsynchronisieren asynchroner Signale auf diesen Takt zugeordnet ist, welche
- zumindest einen Signaleingang aufweist, welcher mit einem asynchronen Ausgang einer der asynchronen Komponenten dieses Satzes verbunden ist, und
- zumindest einen Signalausgang für, aus den Signalen dieses zumindest einen Signaleingangs gewonnen, einsynchronisierten Signale aufweist, welcher mit internen Eingängen der Hauptkomponenten verbunden ist, wobei jeweils gleichartige Eingänge sämtlicher Hauptkomponenten von demselben Signalausgang versorgt sind.

Hierdurch gelingt es, asynchrone Komponenten gedoppelt zu realisieren und zugleich gewährzuleisten, dass von diesen gelieferte Signale die Mikrosynchronität nicht korrumpieren können. Der erfindungsgemäße Gedanke, nur eines der Ausgangssignale der asynchronen Komponenten zu verwenden und es allen Hauptkomponenten zuzuführen, garantiert, dass die Eingangssignale stets für sämtliche Hauptkomponenten identisch sind, auch für möglicherweise stark unterschiedliche Taktverhältnisse hinsichtlich der asynchronen Komponenten.

Eine vorteilhafte Weiterbildung der Erfindung ermöglicht eine zusätzliche Überprüfung der Übereinstimmung der asynchronen Komponenten gegeneinander dadurch, dass der Vergleichereinrichtung die Signale der internen Ausgänge die einander entsprechen, zum gegenseitigen Vergleich zugeführt sind.

Günstigerweise kann der Satz asynchroner Komponenten, bzw. zumindest einer der Sätze, beruhend auf einem Takt eines von dem Haupttaktsystem verschiedenen Nebentaktsystems betreibbar sein. In diesem Falle ist es des weiteren vorteilhaft, wenn die Synchronisiereinrichtung zusätzlich von dem Takt des betreffenden Nebentaktsystems zum Aufsynchronisieren von Signalen auf diesen Takt angesteuert ist, sowie
- zumindest einen Signaleingang aufweist, welcher mit einem internen Ausgang einer der Hauptkomponenten verbunden ist, und
- zumindest einen Signalausgang für aus den Signalen dieses zumindest einen Signaleingangs gewonnen, aufsynchronisierte Signale aufweist, welcher mit asynchronen Eingängen der asynchronen Komponenten des betreffenden Satzes verbunden ist, wobei jeweils gleichartige Eingänge sämtlicher Komponenten des Satzes von demselben Signalausgang versorgt sind.

Diese Weiterbildung des Erfindungsgedankens stellt sicher, dass die Eingänge der asynchronen Komponenten stets mit identischen Signalen belegt sind, und vermeidet so ein "Auseinanderlaufen" der asynchronen Komponenten zum Besseren Schutz der Mikrosynchronität der Hauptkomponenten.

Um auch diese internen Ausgänge auf gegenseitige Übereinstimmung zu überprüfen, können zweckmäßigerweise der Vergleichereinrichtung die Signale einander entsprechender dieser internen Ausgänge zum gegenseitigen Vergleich zugeführt sein.

Die Erfindung wird im folgenden anhand eines Ausführungsbeispieles, welches einen gedoppelten ASIC-Baustein ('Application Specific Integrated Circuit', anwendungsspezifischer integrierter Schaltkreis) betrifft, näher erläutert. Hierzu wird Bezug auf die beigefügten Figuren genommen, welche zeigen:
- Fig. 1: ein Blockdiagramm eines erfindungsgemäßen integrierten Schaltkreises;
- Fig. 2: zwei bevorzugte Realisierungen eines Synchronisierelementes; und
- Fig. 3: eine Synchronisierschaltung zur Verwendung in der Vergleichereinrichtung des integrierten Schaltkreises der Fig. 1.

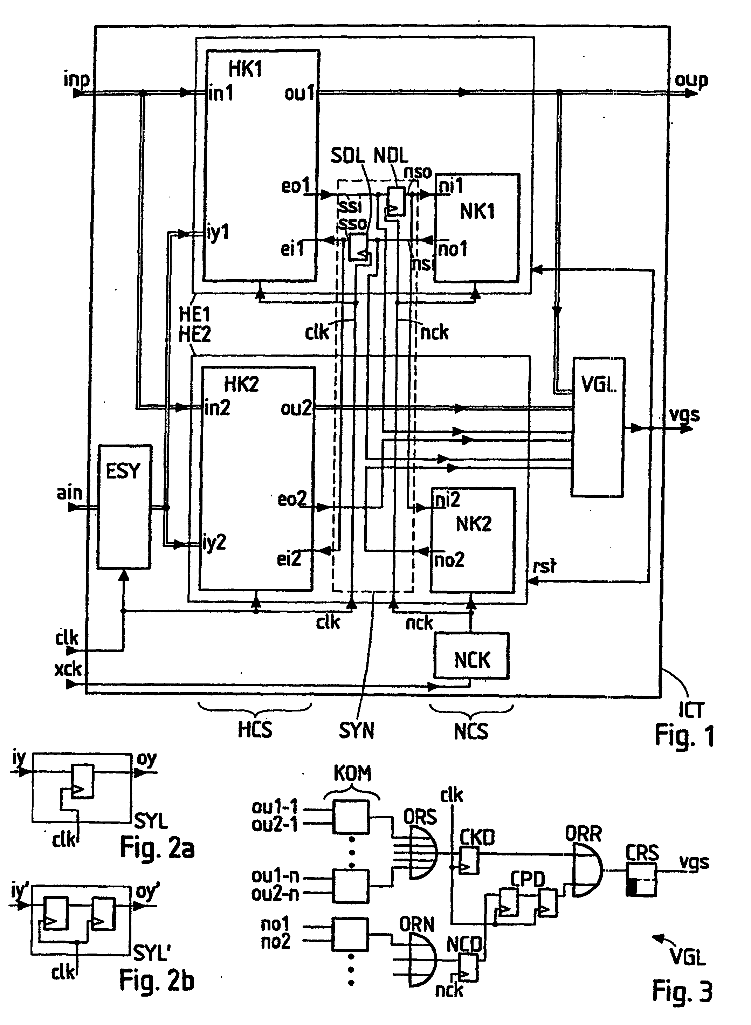

In dem in Fig. 1 gezeigten ASIC-Baustein ICT ist der Kernschaltkreis zweifach in Form von Einzelschaltkreisen HE1,HE2 realisiert, welche jeweils eine Hauptkomponente HK1,HK2 sowie zumindest eine zu den Hauptkomponenten asynchrone Komponente NK1,NK2 enthalten. Beispielsweise ist der ASIC-Baustein ein PCI-Baustein für eine Datenverarbeitungsanlage, dessen Hauptkomponenten mit dem Prozessortakt, beispielsweise 100 MHz arbeiten, während die PCI-Schaltung zur Steuerung eines PCI-Bus als asynchrone Komponente mit einem anderen Takt, z.B. 66 MHz, betrieben ist. Zusätzlich weist der Baustein ICT Komponenten auf, die nicht einem der Einzelschaltkreise HE1,HE2 zuzuordnen sind, wie z.B. der Vergleicher VGL und die Einsynchronisierung ESY.

Die Hauptkomponenten HK1,HK2 werden von einem gemeinsamen Taktsignal clk ("Haupttakt") versorgt, welches z.B. extern eingespeist wird, und laufen gestützt auf dieses Taktsignal clk in einem mikrosynchronen Betrieb. Die ASIC-Eingangsleitungen inp des Bausteins ICT sind in dem Baustein nach bekannter Art auf die Eingänge in1,in2 beider Hauptkomponenten HK1,HK2 zugeführt. Die Signale der Eingangsleitungen inp unterliegen ebenfalls dem Haupttakt clk. Darüber hinaus können sogenannte asynchrone Eingänge ain vorgesehen sein; über diese Eingänge ain können Signale eingespeist werden, die taktunabhängig sind oder einem fremden Takt unterliegen. Damit diese asynchronen Signale - z.B. in Zusammenwirken mit restlichen Taktabweichungen zwischen den Hauptkomponenten - zuverlässig in gleichen Taktzyklen des Haupttaktes verwertet werden, sind die asynchronen Eingänge ain über eine Einsynchronisierung ESY an die entsprechenden Eingänge iy1,iy2 der Hauptkomponenten gelegt. Auf diese Weise wird ein "Auseinanderlaufen" der beiden Hauptkomponenten HK1,HK2 im mikrosynchronen Betrieb verhindert. In der Einsynchronisierung wird jeder der Eingänge ain auf den Eingang iy jeweils eines von dem Takt clk angesteuertes Synchronisierelementes SYL (Fig. 2) geführt, dessen Ausgang oy beiden entsprechenden Eingängen der Hauptkomponente (jeweils einem der Eingänge iy1,iy2) zugeführt ist. Die Synchronisierelemente können, wie in Fig. 2a gezeigt, z.B. mittels eines D-Registers realisiert sein. Günstigerweise sind die Synchronisierelemente mit Hilfe mehrerer, z.B. zweier, in Serie geschalteter D-Register realisiert, wie in Fig. 2b gezeigt ist. Hierdurch kann das betreffende Signal in mehrere Takte des schnelleren Taktsystems gespeist bzw. ein Laufzeitausgleich realisiert werden.

Die Ausgänge ou1 einer der ersten Hauptkomponente HK1 werden als ASIC-Ausgänge oup aus dem ASIC-Baustein ICT herausgeführt. Die Ausgänge ou2 der zweiten Hauptkomponente HK2 werden zur Überprüfung des fehlerfreien Betriebs des gedoppelten Schaltkreises genutzt. Somit arbeitet der eine Einzelschaltkreis HE1 als Master, der andere Einzelschaltkreis HE2 dient dagegen der Überprüfung. Zu letzterem Zweck werden sämtliche Ausgänge ou1,ou2 der Hauptkomponenten HK1,HK2 einem Vergleicher VGL zugeführt. Bezugnehmend auf Fig. 3 werden in dem Vergleicher VGL beide Gruppen von Ausgängen ou1-1, ..., ou1-n, ou2-1, ..., ou2-n in Komparatorzellen KOM in jedem Takt miteinander verglichen. Die Komparatorzellen sind z.B. mittels EXOR-Gatter realisiert. Eine Auswertelogik ORS fasst alle Komparatorausgänge mittels einer ODER-Verknüpfung zusammen, speichert das Ergebnis - Speicherzelle CRS - und löst nach bekannter Art über einen Ausgang vgs einen Fehleralarm aus, beispielsweise mittels eines Interrupts oder eines Resets über eine entsprechenden Interrupt/Reset-Eingang rst. In den Komponenten HK1,HK2 kann der Fehlerzustand über den Eingang rst beispielsweise auch ausgelesen und mit Hilfe von Software verarbeitet werden, z.B. in einer Selbstdiagnose-Routine.

Asynchrone Funktionsblöcke innerhalb des ASIC-Schaltkreises werden erfindungsgemäß ebenfalls gedoppelt; die Schnittstelle zur Aufsynchronisierung wird jedoch gemäß der Erfindung nur einmal realisiert, wie im folgenden näher erläutert ist.

Wie in Fig. 1 gezeigt, weist jeder Einzelschaltkreis HE1,HE2 je eine asynchrone Komponente NK1,NK2 auf. Die asynchronen Komponenten sind zueinander gleichwertig, entsprechend dem Prinzip der Doppelung der ASIC-Komponenten; sie werden im gezeigten Beispiel durch einen eigenen Takt nck ("Nebentakt") angesteuert, welcher beispielsweise mittels eines Taktgenerators NCK aus einem extern eingespeisten Takt xck gebildet wird. Im gezeigten Beispiel ist dieser externe Takt xck von dem Haupttakt clk verschieden; diese können selbstverständlich gleich sein. Beispielsweise kann der Haupttakt ein 100 MHz-Takt sein, der Nebentakt ein 33 MHz-Takt. Die von dem Nebentakt nck versorgten asynchronen Komponenten NK1,NK2 stellen hinsichtlich des ihnen zugrundeliegenden Taktes ein eigenes Taktsystem dar, das hier als "Nebentaktsystem" NCS bezeichnet werden soll, im Gegensatz zum "Haupttaktsystem" HCS der Hauptkomponenten HK1,HK2 basierend auf dem Haupttakt clk. Es sei hierbei angemerkt, dass die Verwendung der Begriffe "Haupt" und "Neben" sich nicht etwa auf eine Hierarchie der Takte bezieht, sondern lediglich in Bezug auf die Mikrosynchronität (die primär in den Hauptkomponenten realisiert ist) gewählt ist.

Die Hauptkomponenten HK1,HK2 und die ihnen jeweils zugeordneten asynchronen Komponenten NK1,NK2 stehen über eine Synchronisiereinrichtung SYN miteinander in Verbindung. Die Synchronisiereinrichtung dient zum einen dem Aufsynchronisieren der Signale interner Ausgänge der Hauptkomponenten, welche als Eingangssignale den asynchronen Komponenten zugeführt werden sollen, zum anderen dem Einsynchronisieren asynchroner Ausgangssignale der asynchronen Komponenten, die umgekehrt internen Eingängen der Hauptkomponenten zugeleitet sind.

Insbesondere ist der interne Ausgang eo1 der ersten Hauptkomponente HK1 den Eingang ni1 der asynchronen Komponente NK1 zugeführt. Die hierfür erforderliche Anpassung an den asynchronen Takt nck geschieht mittels eines Synchronisierelements NDL, dessen Eingang ssi mit dem internen Ausgang eo1 verbunden ist. Das Synchronisierelement NDL ist beispielsweise ein mit dem Takt nck angesteuertes D-Register oder (vgl. Fig. 2b) mittels zweier D-Register in Serie realisiert.

Der Ausgang nso des Synchronisierelements NDL ist nicht nur mit dem Eingang ni1 der ersten asynchronen Komponente NK1 verbunden, sondern auch mit dem entsprechenden Eingang ni2 der anderen asynchronen Komponente NK2. Nach der Erfindung versorgt somit der interne Ausgang eo1 die zugeordneten Eingänge ni1,ni2 des gesamten Satzes asynchroner Komponenten NK1,NK2.

Der diesem Ausgang eo1 entsprechende Ausgang eo2 der zweiten Hauptkomponente HK2 wird lediglich zu Vergleichszwecken genutzt. Hierfür werden die Signale beider Ausgänge eo1,eo2 wie in Fig. 1 gezeigt der Vergleichereinrichtung VGL zugeführt. Der Vergleich dieser Signale erfolgt auf grundsätzlich gleiche Art wie der Vergleich der Ausgänge ou1,ou2 und ist daher in Fig. 3 nicht explizit dargestellt.

Ebenso wie für die Ausgänge eo1,eo2 und die zugeordneten Eingänge ni1,ni2 der asynchronen Komponenten erfolgt die Umsetzung anderer, in Fig. 1 nicht gezeigter interner Ausgangssignale der Hauptkomponenten für die asynchronen Komponenten.

Auf analoge Weise erfolgt die Einsynchronisierung der asynchronen Ausgangssignale, welche von den asynchronen Komponenten NK1,NK2 an die Hauptkomponenten HK1,HK2 zurückgeliefert werden. Dies ist in Fig. 1 am Beispiel der asynchronen Ausgänge no1,no2 gezeigt. Die Einsynchronisierung auf den Takt clk des Haupttaktsystems geschieht mittels eines Synchronisierelements SDL, dessen Eingang nsi mit dem Ausgang no1 einer der asynchronen Komponenten NK1 verbunden ist. Hier ebenfalls ist das Synchronisierelement SDL beispielsweise ein oder zwei (vgl. Fig. 2b) mit dem Takt clk angesteuerte(s) D-Register. Sein Ausgang sso ist sowohl mit dem internen Eingang ei1 der ersten Hauptkomponente HK1 verbunden, als auch mit dem entsprechenden Eingang ei2 der anderen Hauptkomponente HK2. Erfindungsgemäß versorgt der asynchrone Ausgang no1 die zugeordneten Eingänge ei1,ei2 sämtlicher Hauptkomponenten HK1,HK2.

Ähnlich wie im Falle der internen Ausgänge eo1,eo2 werden die Signale beider asynchronen Ausgänge no1,no2 der Vergleichereinrichtung VGL zugeführt. Dies ermöglicht als besonderen Vorteil der Erfindung die Überwachung des Gleichlaufes der gedoppelten asynchronen Komponenten des Systems. Der Vergleich der asynchronen Signale der Ausgänge no1,no2 und die Verarbeitung des Vergleichsresultats ist in dem Beispiel der Fig. 3 dargestellt. Die Ausgangssignale no1,no2 werden mittels einer Komparatorzelle KOM laufend verglichen, und mittels einer ODER-Verknüpfung - Gatter ORN - werden die Vergleiche des betreffenden Nebentaktsystems zusammengefasst. Die so erhaltenen Vergleichssignale der einzelnen Taktsysteme - Ausgänge der Gatter ORS und ORN - werden nun aufeinander synchronisiert. Hierzu werden sie günstigerweise über jeweils ein D-Register geführt, das mit dem jeweils eigenen Takt clk bzw. nck angesteuert ist. Das Vergleichssignal des "langsameren" Taktsystems, in diesem Falle jenes des 33 MHz-Taktes nck, wird sodann mit Hilfe einer Synchronisierschaltung CPD auf den schnelleren Takt, hier den 100 MHz-Takt clk, umgesetzt. Schließlich werden die nunmehr auf einem einheitlichen Takt beruhenden Vergleichssignale zusammengefasst, z.B. mittels eines ODER-Gatters ORR, dem ein Speicher CRS nachgeschaltet ist. Die Erfindung ermöglicht die rasche und unmittelbare Erkennung eines Fehlerzustandes innerhalb weniger Systemtakte, so etwa in dem in der Fig. 3 gezeigten Beispiel nach spätestens zwei Takten des Nebentaktes nck zuzüglich der Verzögerungszeit in den ODER-Gattern und des Speicher-Flip-Flops CRS.

Ebenso wie für die Ausgänge no1,no2 und die zugeordneten internen Eingänge ei1,ei2 erfolgt die Umsetzung anderer, in Fig. 1 nicht gezeigter asynchroner Ausgangssignale für die Hauptkomponenten.

Es sei an dieser Stelle darauf hingewiesen, dass in Fig. 1 lediglich ein beispielhafter Satz NK1,NK2 asynchroner Komponenten gezeigt ist. Ebenso ist es möglich, dass mehrere asynchrone Komponenten in einem Einzelschaltkreis realisiert sind, wobei das oben Gesagte in analoger Weise jeweils für eine asynchrone Komponente gilt; hierbei können die verschiedenen Sätze asynchroner Komponenten auch jeweils von verschiedenen Nebentakten versorgt sein.

Die Erfindung gestattet eine Selbstüberwachung sowohl der mikrosynchronen als auch der asynchronen Komponenten eines integrierten Schaltkreises, insbesondere eines ASIC-Bausteins, wobei Software- und Hardware-Fehler nicht erst in einem Testdurchlauf, z.B. in einer Selbsttest-Routine, entdeckt werden, sondern sofort während des Betriebs. Die zuständige Software kann daher auf einen Fehler sehr schnell reagieren. Infolge die Einbeziehung der asynchronen Komponenten in die Doppelung und die Überwachung durch die Vergleichereinrichtung gelingt eine rasche Selbstüberwachung auch dieser Komponenten, was im besonderen im Vergleich zu der zeitaufwendigen Überwachung durch eine BIST-Routine vorteilhaft ist.

## Patentansprüche

1. Integrierter Schaltkreis (ICT) mit zumindest zwei gleichartigen Hauptkomponenten (HK1,HK2), welche in synchroner Betriebsart beruhend auf einem Takt (clk) eines Haupttaktsystems (HCS) betreibbar sind, sowie mit einer Vergleichereinrichtung (VGL), welcher die Signale einander entsprechender Ausgänge (ou1,ou2) der Hauptkomponenten zum gegenseitigen Vergleich zugeführt sind und welche einen Vergleicherausgang (vgs) zur Ausgabe eines Fehlersignals im Falle einer mangelhaften Übereinstimmung dieser Signale aufweist,
**gekennzeichnet durch**
zumindest eine von dem Takt (clk) des Haupttaktsystems angesteuerte Synchronisiereinrichtung (SYN,ESY) zum Einsynchronisieren asynchroner Signale auf diesen Takt (clk), welcher über zumindest einen Eingang asynchrone Eingangssignale (nsi,ain) zugeführt sind und welche zumindest einen Signalausgang (sso) für aus den asynchronen Eingangssignalen gewonnenen, einsynchronisierten Signale aufweist, welcher mit Eingängen (ei1,ei2,iy1,iy2) der Hauptkomponenten (HK1,HK2) verbunden ist, wobei jeweils gleichartige Eingängë sämtlicher Hauptkomponenten von demselben Signalausgang versorgt sind.

2. Integrierter Schaltkreis (ICT) nach Anspruch 1,
**gekennzeichnet durch**
zumindest einen Satz asynchroner Komponenten (NK1,NK2), welche unabhängig von dem Takt (clk) des Haupttaktsystems betreibbar sind, wobei die asynchronen Komponenten des/jedes Satzes untereinander gleichartig sind und jeweils zumindest einen mit einem internen Ausgang (eo1,eo2) der Hauptkomponenten (HK1,HK2) verbundenen asynchronen Eingang (ni1,ni2) aufweisen, sowie jeweils eine asynchrone Komponente des/jedes Satzes einer Hauptkomponente zugeordnet ist,
wobei dem/jedem Satz asynchroner Komponenten (NK1,NK2) zumindest eine von dem Takt (clk) des Haupttaktsystems angesteuerte Synchronisiereinrichtung (SYN) zum Einsynchronisieren asynchroner Signale auf diesen Takt (clk) zugeordnet ist, welche
- zumindest einen Signaleingang (nsi) aufweist, welcher mit einem asynchronen Ausgang (no1) einer der asynchronen Komponenten (NK1) dieses Satzes verbunden ist, und
- zumindest einen Signalausgang (sso) für aus den Signalen dieses zumindest einen Signaleingangs (nsi) gewonnen, einsynchronisierten Signale aufweist, welcher mit internen Eingängen (ei1,ei2) der Hauptkomponenten (HK1,HK2) verbunden ist, wobei jeweils gleichartige Eingänge sämtlicher Hauptkomponenten von demselben Signalausgang versorgt sind.

3. Integrierter Schaltkreis nach Anspruch 1 oder 2,
**dadurch gekennzeichnet, dass** der Vergleichereinrichtung (VGL) einander entsprechende asynchrone Ausgänge (no1,no2) der asynchronen Komponenten (NK1,NK2) eines Satzes zum gegenseitigen Vergleich zugeführt sind.

4. Integrierter Schaltkreis nach einem der Ansprüche 1 bis 3,
**dadurch gekennzeichnet, dass** der Satz asynchroner Komponenten (NK1,NK2), bzw. zumindest einer der Sätze, beruhend auf einem Takt (nck) eines von dem Haupttaktsystem verschiedenen Nebentaktsystems (NCS) betreibbar ist.

5. Integrierter Schaltkreis nach Anspruch 4,
**dadurch gekennzeichnet, dass** die Synchronisiereinrichtung (SYN) zusätzlich von dem Takt (nck) des betreffenden Nebentaktsystems (NCS) zum Aufsynchronisieren von Signalen auf diesen Takt (nck) angesteuert ist, sowie
- zumindest einen Signaleingang (ssi) aufweist, welcher mit einem internen Ausgang (eo1) einer der Hauptkomponenten (HK1) verbunden ist, und
- zumindest einen Signalausgang (nso) für aus den Signalen dieses zumindest einen Signaleingangs (ssi) gewonnen, aufsynchronisierte Signale aufweist, welcher mit asynchronen Eingängen (ni1,ni2) der asynchronen Komponenten (NK1,NK2) des betreffenden Satzes verbunden ist, wobei jeweils gleichartige Eingänge sämtlicher Komponenten des Satzes von demselben Signalausgang versorgt sind.

6. Integrierter Schaltkreis nach Anspruch 5,
**dadurch gekennzeichnet, dass** der Vergleichereinrichtung (VGL) die Signale der internen Ausgänge (eo1,eo2), die einander entsprechen, zum gegenseitigen Vergleich zugeführt sind.

## Claims

1. Integrated circuit (ICT) having at least two similar primary components (HK1,HK2) which can be operated in a synchronous operating mode based on a clock (clk) from a primary clock system (HCS), and having a comparator device (VGL) to which the signals from mutually corresponding outputs (ou1,ou2) of the primary components are supplied for comparison with one another and which has a comparator output (vgs) for outputting a fault signal if there is insufficient accord between these signals,
**characterized by**
at least one synchronization device (SYN,ESY), actuated by the clock (clk) from the primary clock system, for synchronizing asynchronous signals to this clock (clk), which synchronization device has asynchronous input signals (nsi,ain) supplied to it via at least one input and which synchronization device has at least one signal output (sso) for synchronized signals obtained from the asynchronous input signals, said signal output being connected to inputs (ei1,ei2,iy1,iy2) of the primary components (HK1,HK2), with similar inputs of all the primary components respectively being fed by the same signal output.

2. Integrated circuit (ICT) according to Claim 1,
**characterized by**
at least one set of asynchronous components (NK1,NK2) which can be operated independently of the clock (clk) from the primary clock system, the asynchronous components in the/in each set being similar to one another and respectively having at least one asynchronous input (ni1,ni2) connected to an internal output (eo1,eo2) of the primary components (HK1,HK2), and a respective asynchronous component in the/in each set being associated with a primary component, where the/each set of asynchronous components (NK1,NK2) has at least one associated synchronization device (SYN), actuated by the clock (clk) from the primary clock system, for synchronizing asynchronous signals to this clock (clk), which synchronization device
- has at least one signal input (nsi) which is connected to an asynchronous output (no1) of one of the asynchronous components (NK1) in this set, and
- at least one signal output (sso) for synchronized signals obtained from the signals from this at least one signal input (nsi), said signal output being connected to internal inputs (ei1,ei2) of the primary components (HK1,HK2), with similar inputs of all the primary components respectively being fed by the same signal output.

3. Integrated circuit according to Claim 1 or 2,
**characterized in that** the comparator device (VGL) has mutually corresponding asynchronous outputs (no1,no2) of the asynchronous components (NK1,NK2) in a set supplied to it for comparison with one another.

4. Integrated circuit according to one of Claims 1 to 3,
**characterized in that** the set of asynchronous components (NK1,NK2), or at least one of the sets, can be operated on the basis of a clock (nck) from a secondary clock system (NCS) which is different than the primary clock system.

5. Integrated circuit according to Claim 4,
**characterized in that** the synchronization device (SYN) is additionally actuated by the clock (nck) from the secondary clock system (NCS) in question in order to lock signals to this clock (nck), and
- has at least one signal input (ssi) which is connected to an internal output (eo1) of one of the primary components (HK1), and
- has at least one signal output (nso) for locked-on signals obtained from the signals from this at least one signal input (ssi), said signal output being connected to asynchronous inputs (ni1,ni2) of the asynchronous components (NK1,NK2) in the set in question, with similar inputs of all the components in the set respectively being fed by the same signal output.

6. Integrated circuit according to Claim 5,
**characterized in that** the comparator device (VGL) has the signals from the internal outputs (eo1,eo2) which correspond to one another supplied to it for comparison with one another.

## Revendications

1. Circuit intégré (ICT) ayant au moins deux constituants principaux (HK1, HK2) similaires, qui peuvent être exploités en mode de fonctionnement synchrone reposant sur une cadence (clk) d'un système d'horloge principale (HCS), ainsi qu'un dispositif comparateur (VGL), sur lequel sont appliqués les signaux de sorties (ou1, ou2), qui se correspondent réciproquement, des constituants principaux en vue de les comparer l'un à l'autre et qui comporte une sortie de comparateur (vgs) destinée à émettre un signal d'erreur dans le cas d'une concordance insuffisante de ces signaux
**caractérisé par**
au moins un dispositif de synchronisation (SYN, ESY), commandé par la cadence (clk) du système d'horloge principal et destiné à synchroniser des signaux asynchrones sur cette cadence (clk), sur lequel sont appliqués, par l'intermédiaire de au moins une entrée, des signaux asynchrones (nsi, ain) et qui comporte, pour des signaux synchronisés obtenus à partir des signaux d'entrée asynchrones, au moins une sortie de signal (sso) qui est reliée à des entrées (ei1, ei2, iy1, iy2) des constituants principaux (HK1, HK2), des entrées dans chaque cas similaires de tous les constituants principaux étant alimentées par la même sortie de signal.

2. Circuit intégré (ICT) selon la revendication 1
**caractérisé par**
au moins un jeu de constituants asynchrones (NK1, NK2), qui peuvent être exploités indépendamment de la cadence (clk) du système principal d'horloge, les constituants asynchrones du jeu ou de chaque jeu étant réciproquement similaires et comportant chacun au moins une entrée asynchrone (ni1, ni2) reliée à une sortie interne (eo1, eo2) des constituants principaux (HK1, HK2), ainsi que chaque constituant asynchrone du jeu ou de chaque jeu étant affecté à un constituant principal,
au jeu ou à chaque jeu de constituants asynchrones (NK1, NK2) étant affecté au moins un dispositif de synchronisation (SYN), commandé par la cadence (clk) du système principal d'horloge et destiné à synchroniser des signaux asynchrones sur cette cadence (clk),
- lequel comporte au moins une entrée de signal (nsi), qui est reliée à une sortie asynchrone (no1) de l'un des constituants asynchrones (NK1) de ce jeu et
- lequel comporte une sortie de signal (sso) pour des signaux synchronisés obtenus à partir des signaux de cette dite au moins une entrée de signal (nsi), sortie de signal (sso) qui est reliée à des entrées internes (ei1, ei2) des constituants principaux (HK1, HK2), des entrées dans chaque cas similaires de tous les constituants principaux étant alimentés par la même sortie de signal.

3. Circuit intégré selon la revendication 1 ou 2
**caractérisé par le fait que**
sur le dispositif comparateur (VGL) sont amenées des sorties asynchrones (no1, no2), qui se correspondent réciproquement, des constituants asynchrones (NK1, NK2) d'un jeu en vue de leur comparaison réciproque.

4. Circuit intégré selon l'une des revendications 1 à 3
**caractérisé par le fait que**
le jeu de constituants asynchrones (NK1, NK2) et/ou au moins l'un des jeux, peut être exploité sur une cadence (nck) d'un système d'horloge auxiliaire (NCS), différent du système d'horloge principal.

5. Circuit intégré selon la revendication 4
**caractérisé par le fait que**
le dispositif de synchronisation (SYN) est commandé en supplément par la cadence (nck) du système d'horloge auxiliaire (NCS) concerné pour synchroniser des signaux sur cette cadence (nck), et
- qu'il comporte au moins une entrée de signal (ssi), qui est reliée à une sortie interne (eo1) de l'un des constituants principaux (HK1) et
- qu'il comporte au moins une sortie de signal (nso) pour des signaux synchronisés obtenus à partir des signaux de cette dite au moins une entrée de signal (ssi), sortie de signal (nso) qui est reliée à des entrées asynchrones (ni1, ni2) des constituants asynchrones (NK1, NK2) du jeu concerné, des entrées dans chaque cas similaires de tous les constituants du jeu étant alimentées par la même sortie de signal.

6. Circuit intégré selon la revendication 5
**caractérisé par le fait que**
les signaux des sorties internes (eo1, eo2), qui se correspondent réciproquement, sont amenés, pour leur comparaison réciproque, sur le dispositif comparateur (VGL).
